Europäisches Patentamt

(19) European Patent Office    (11) Publication number: **0 209 999**
Office européen des brevets    **B1**

## EUROPEAN PATENT SPECIFICATION

(12)

(45) Date of publication of the patent specification:
06.06.90

(21) Application number: **86305032.4**

(22) Date of filing: **27.06.86**

(51) Int. Cl.⁵: **B63H 23/32,** F16J 15/46, F16J 15/40

㊿ Seals.

(30) Priority: **13.07.85 GB 8517715**

(43) Date of publication of application:
**28.01.87 Bulletin 87/5**

(45) Publication of the grant of the patent:
**06.06.90 Bulletin 90/23**

(84) Designated Contracting States:
**BE DE FR GB IT NL SE**

(56) References cited:
**GB-A- 2 109 875**
**US-A- 2 971 783**
**US-A- 4 094 512**

(73) Proprietor: **JOHN CRANE UK LIMITED, Crossbow House 40 Liverpool Road, Slough, Berkshire SL1 4QX(GB)**

(72) Inventor: **Bristow, Peter, 18 Hamilton Close, Havant Hampshire(GB)**

(74) Representative: **Watts, Peter Graham et al, Anthony Cundy & Co. 384 Station Road Dorridge, Solihull West Midlands B93 8ES(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to seals and in particular seals for use where a rotary component passes through a partition which separates one chamber from another.

British Patent Specification GB 2 109 875B discloses a bulkhead seal which remains substantially inoperative until one side of the bulkhead is flooded, when exposure of the sealing element to the liquid or liquid pressure differential causes it to make sealing engagement. The liquid in the flooded compartment in addition to actuating the seal also lubricates and cools the sealing elements, so that the rotary component passing through the bulkhead may be used without undue risk of premature failure of the bulkhead seal.

There is now a requirement to provide a bulkhead seal which, when in operation is gas tight, so that hazards such as gas, smoke or chemical vapours may be confined to one side of the bulkhead. The seal disclosed in GB 2 109 875B is not suitable for this purpose as it relies on the presence of liquid for actuation, lubrication and cooling.

According to one aspect of the present invention a seal for producing a gas tight closure between a rotary component and a partition separating two chambers, where the rotary component penetrates the partition comprises; retaining means adapted to be mounted on the partition so as to surround the rotary component as it passes through the partition, said retaining means being arranged to locate a sealing assembly in a manner which will permit limited radial movement of the rotary component relative to the retaining means, said sealing assembly including an annular floating member the inner periphery of which is dimensioned to provide a small clearance about the rotary component and sealing means adapted to be interposed between the inner peripheral surface of the floating member and the opposed surface of the rotary component, said sealing means being arranged to seal the gap between the floating member and the rotary component and the floating member being arranged to make sealing engagement with the retaining means upon exposure to liquid on one side of the sealing assembly; characterised in that the retaining means defines a pair of axially spaced annular formations, each formation locating a separate sealing assembly in spaced apart relationship to define a annular chamber therebetween, an inlet being provided to the chamber by means of which liquid may be introduced into the chamber to cause the sealing assemblies to come into sealing engagement with the rotary component and the retaining means.

In operation, under normal conditions, the sealing elements of the seal disclosed above are not in sealing engagement and will be subjected to little wear as there is little frictional engagement between the sealing elements and rotary component. It is only in an emergency that the chamber between the floating members would be flooded with liquid to bring the sealing elements into sealing engagement and provide a gas tight seal. The liquid which is retained in the annular chamber between the floating members will provide lubrication and cooling of the sealing elements and will also contain any gas that leaks past the sealing elements. As the floating members are free to move radially of the axis of the rotary component, the clearance between its inner surface and the rotary component may be quite small, while still accommodating out-of-centre and angular movement of the rotary component. Furthermore, the sealing action is not dependent on rotation of the rotary component and will consequently function whether the component is rotating or not.

Actuation of the seal by introduction of liquid into the space between the floating members, may be controlled manually or automatically by, for example smoke or gas detectors. In addition to providing a gas tight seal the seal of the present invention will also provide a fluid tight seal, in the manner disclosed in British Patent Specification GB 2 l09 875B, in the event that a chamber on one side of the partition is flooded.

The sealing means may be arranged to be brought into sealing engagement upon introduction of liquid into the space between the floating members, as a result of the pressure differential exerted by the liquid. Alternatively the sealing means may be brought into action as a result of physical change in the sealing means resulting from its exposure to the liquid, for example the sealing means may swell upon contact with the liquid.

Various embodiments are now described, by way of example only, with reference to the accompanying drawings in which:

Figure I shows a part-sectional elevation of a seal formed in accordance with the present invention, and

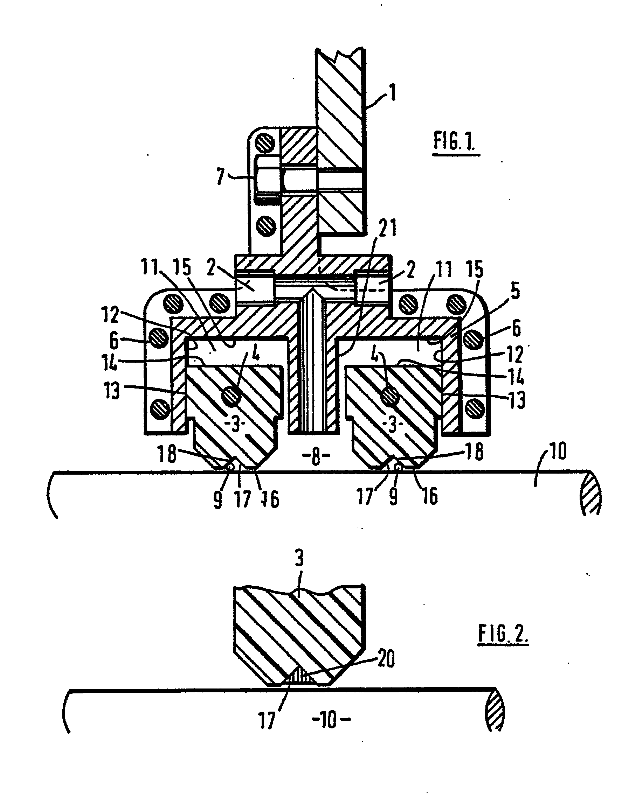

Figure 2 shows a part-sectional view of an alternative form of sealing means that may be used in the seal construction shown in Figure I.

As illustrated in Figure I, a seal for sealing a ship's bulkhead I where it is penetrated by a propeller shaft I0 comprises a retaining means or housing 5 which is bolted to the bulkhead I by means of a series of circumferentially spaced bolts 7, so that it surrounds the propeller shaft I0. The housing 5 defines a pair of inwardly directed annular recesses II which are spaced axially with respect to the propeller shaft I0.

A pair of annular floating members 3 are mounted one in each of the annular recesses II, so that they extend radially from the recesses II. The opposed surfaces I2, I3 of the recesses II and floating members 3 are lapped, so that when in engagement they will provide a liquid tight seal. A small clearance is provided between the surfaces I2, I3 so as to provide only limited axial movement of the floating members 3. A substantial clearance is provided between the outer periphery I4 of the floating members 3 and the cylindrical surface I5 of the recesses II so that the floating members 3 are free to move radially to accommodate any axial misalignment of the shaft I0.

Each of the floating members 3 surrounds the shaft I0, there being a small clearance between the

inner periphery I6 of each member 3 and the shaft I0. The inner periphery I6 of each member 3 is provided with a groove I7 the walls I8 of which are inclined to the axis of the shaft I0. An elastomeric O-ring 9 is slidingly located around the shaft I0, within the groove I7, so that when in the central portion of the groove I7 it will be clear of the surface of the member 3, over most of its circumference.

An inlet 2 is provided in the housing 5 and passes through the annular flange 2I which separates the recesses II opening into the annular space 8, so that liquid under pressure may be introduced into the annular space 8 between the floating members 3.

In operation, under normal circumstances, the O-rings 9 will be free to revolve around or with the shaft I0 and will only be in partial, light contact with their associated floating member 3 and will not consequently be subjected to any significant wear. However, in an emergency, liquid under pressure may be supplied from an appropriate source, through inlet 2 into the space 8 between the floating members 3. The pressure of this liquid will force the floating members 3 apart so that the opposed surfaces I2, I3 of the floating members 3 and housing 5 abut and make sealing engagement with one another. The liquid pressure will also force the O-rings 9 into contact with the inclined walls I8 of grooves I7 and the shaft I0 to provide a liquid tight seal between the floating members 3 and shaft I0. The liquid is thus contained in a liquid tight annular chamber between the floating members 3 and forms a gas tight seal between the compartments separated by the bulkhead I. Introduction of liquid into the space between the floating members 3 to effect emergency operation of the seal may be controlled manually or triggered automatically in response to an emergency. Furthermore, should the chamber on one side of the bulkhead become flooded, the pressure of water in that chamber will cause surface I3 the floating member 3 remote from the flooded compartment to move into sealing engagement with surface I2 the housing 5 and the O-ring 9 to engage the opposed surfaces of the groove I7 and shaft I0, to provide a liquid tight seal which will prevent leakage into the chamber on the other side of the bulkhead.

In a modification of the above embodiment, the elastomeric O-rings 9 may be located within grooves on the shaft I0, the O-rings 9 and grooves I7 being dimensioned so that as the floating members 3 move into sealing engagement with the opposed surfaces I2 of the housing 5, the inclined walls of the grooves I7 also engage the O-rings 9. In a further modification of the above embodiment the O-rings may be replaced by strips having strands of material, for example nylon which form soft bristles. The strip is located in a recess in groove I7, so that under normal circumstances the strands will sweep lightly over the opposed surface of shaft II. However when liquid is introduced into chamber 8 the liquid pressure will deflect the strands into the narrow gap between surface I8 of groove I7 and the shaft II thereby blocking the gap and providing a liquid tight seal.

In the embodiment illustrated in Figure 2 in place of the O-rings 9 the groove I7 in the inner periphery I6 of the floating members 3 is packed with a material 20 which will absorb liquid and swell. In this manner under normal operating conditions the floating members 3 will have a clearance on the shaft I0, but when liquid is introduced into the space between the floating members 3, liquid seeping through the gaps between the floating members 3 and shaft I0, will be absorbed by the material 20 which will swell to seal the gaps between the floating member and shaft, thereby forming a fluid tight seal. The packing material 20 may be a natural material such as softwood or may be a suitable synthetic material.

The material 20 may be permanently anchored in the groove I7 or may be arranged to leak into the gap between the floating member 3 and shaft I0, so that as it swells, it will seal off the gap. In the latter case, the material may conveniently be a combination of a soluble material with a sealant in the form of fibres or particles which will swell in contact with liquid, so that as the soluble material dissolves the fibres or particles are free to fill the gap between the floating member 3 and shaft I0.

In the embodiment described above, the floating members 3 permit free out-of-centre rotation and angular movement of the shaft, so that under normal circumstances, the sealing members would not be subject to undue wear. Preferably the floating members 3 are formed from light material such as a reinforced plastic.

In the embodiment illustrated in Figure I, the housing 5 is formed in two halves and is secured together by a series of bolts 6; and the floating members 3 are formed in two halves which are secured together by means of tangential bolts 4. This construction enables the seal to be fitted or replaced without removal of the propeller shaft. However, one piece components may be used where removal of the shaft is not a problem.

## Claims

I. A seal for producing a fluid tight closure between a rotary component (I0) and a partition (I) separating two chambers where the rotary component (I0) penetrates the partition (I), said seal including retaining means (5) adapted to be mounted on the partition (I) so as to surround the rotary component (I0) as it passes through the partition (I), said retaining means (5) being arranged to locate a sealing assembly (3, 9; 20) in a manner which will permit limited radial movement of the rotary component (I0) relative to the retaining means (5), said sealing assembly (3, 9; 20) including an annular floating member (3) the inner periphery (I6) of which is dimensioned to provide a small clearance about the rotary component (I0) and sealing means (9; 20) adapted to be interposed between the inner peripheral surface (I8) of the floating member (3) and the opposed surface of the rotary component (I0), said sealing means (9; 20) being arranged to seal the gap between the floating member (3) and the rotary component (I0) and the floating member (3) being arranged to make sealing engagement with the retaining means (5) upon exposure to liquid on one side of the sealing assembly (3, 9; 20); characterised in that the retaining means (5) defines a pair of axially spaced annular formations (II), each formation (II) locating a separate sealing assembly (3, 9; 20) in spaced apart relationship to define a annular chamber (8) therebetween, an inlet (2) being provided to the chamber (8) by means of which liquid may be introduced into the chamber (8) to cause the sealing assemblies (3, 9; 20) to come into sealing engagement with the rotary component (l0) and the retaining means (5).

2. A seal according to Claim I characterised in that the retaining means (5) defines a pair of annular recesses (II) opening inwardly, the floating members (3) being located between radial walls (l2) of the recesses (II) and having radially opposed surfaces (l3) which are capable of making liquid tight engagement with the walls (l2) of the recesses (II), in response to the axial pressure applied to the floating members (3) by exposure to liquid on one side of the floating member (3).

3. A seal according to Claim 2 characterised in that a radially inwardly directed flange portion (2l) separates the two recesses (II), the inlet (2) to the annular chamber (8) being provided through this flange portion (2l).

4. A seal according to any one of Claims I to 3 characterised in that the sealing means (9) associated with each of the floating members (3) seals the gap between the inner peripheral surface (l8) of the floating member (3) and the opposed surface of the rotary component (l0) as a result of pressure differential exerted by exposure to liquid on one side of the floating member (3).

5. A seal according to Claim 4 characterised in that the inner peripheral surface of each floating member (3) is provided with an annular groove (l7) with inclined walls (l8) and an elastomeric O-ring (9) positioned between the rotary component (l0) and the floating member (3) within the groove (l7) so that when subjected to a pressure differential the elastomeric O-ring (9) will be wedged between one of the inclined surfaces (l8) of the groove (l7) and the rotary component (l0) to form a seal therebetween.

6. A seal according to Claim 5 characterised in that the elastomeric O-ring (9) is located within a groove in the rotary component (l0).

7. A seal according to any one of Claims I to 3 characterised in that the sealing means (20) undergoes a physical change, upon exposure to liquid, this change causing the sealing means (20) to close the gap between the inner peripheral surface (l8) of the floating member (3) and the rotary component (l0).

8. A seal according to Claim 7 characterised in that the sealing means (20) swells upon exposure to liquid.

9. A seal according to any one of the preceding claims characterised in that the retaining means (5) and the floating members (3) are formed in a plurality of arcuate parts which may be secured together about the rotary component (l0).

**Patentansprüche**

1. Dichtung zum Erzeugen eines fluiddichten Verschlusses zwischen einem drehbaren Bauteil (10) und einer Trennwand (1), die zwei Kammern voneinander trennt, wobei das drehbare Bauteil (10) die Trennwand (1) durchdringt, wobei die Dichtung eine Halteeinrichtung (5) aufweist, die an der Trennwand (1) so befestigbar ist, daß sie das drehbare Bauteil (10) umgibt, wenn es durch die Trennwand (1) hindurchgeht, wobei die Halteeinrichtung (5) dafür ausgebildet ist, eine Dichtungsanordnung (3, 9; 20) an Ort und Stelle auf eine Art und Weise zu halten, die eine begrenzte Radialbewegung des drehbaren Bauteiles (10) relativ zu der Halteeinrichtung (5) gestattet, wobei die Dichtungsanordnung (3, 9; 20) ein ringförmiges schwimmendes Teil (3), dessen innerer Umfang (16) so bemessen ist, daß ein kleiner Spielraum um das drehbare Bauteil (10) herum geschaffen wird, und ein Dichtungsmittel (9; 20) aufweist, das zwischen der inneren Umfangsfläche (18) des schwimmenden Teiles (3) und der entgegengesetzten Oberfläche des drehbaren Bauteiles (10) angeordnet werden kann, wobei das Dichtungsmittel (9; 20) dafür ausgebildet ist, den Spalt zwischen dem schwimmenden Teil (3) und dem drehbaren Bauteil (10) abzudichten, und das schwimmende Teil (3) dafür ausgebildet ist, einen Dichtungseingriff mit der Halteeinrichtung (5) herzustellen, wenn sie einer Flüssigkeit auf einer Seite der Dichtungsanordnung (3, 9; 20) ausgesetzt wird; dadurch gekennzeichnet, daß die Halteeinrichtung (5) ein Paar axial beabstandeter ringförmiger Gebilde (11) begrenzt, von denen jedes eine getrennte Dichtungsanordnung (3, 9; 20) im Abstand an Ort und Stelle hält, um eine ringförmige Kammer (8) zwischen ihnen zu bilden, wobei ein Einlaß (2) zu der Kammer (8) gebildet ist, durch den Flüssigkeit in die Kammer (8) eingeführt werden kann, um zu veranlassen, daß die Dichtungsanordnungen (3, 9; 20) in Dichtungseingriff mit dem drehbaren Bauteil (1) und der Halteeinrichtung (5) kommen.

2. Dichtung nach Anspruch 1, dadurch gekennzeichnet, daß die Halteeinrichtung (5) ein Paar ringförmiger Ausnehmungen (11) begrenzt, die sich nach innen öffnen, wobei die schwimmenden Teile (3) zwischen radialen Wänden (12) der Ausnehmungen (11) angeordnet sind und radial entgegengesetzte Oberflächen (13) haben, die in der Lage sind, einen flüssigkeitsdichten Eingriff mit den Wänden (12) der Ausnehmungen (11) als Antwort auf den Axialdruck zu machen, der auf die schwimmenden Teile (3) dadurch aufgebracht wird, daß sie der Flüssigkeit auf einer Seite des schwimmenden Teiles (3) ausgesetzt werden.

3. Dichtung nach Anspruch 2, dadurch gekennzeichnet, daß ein radial nach innen gerichteter Flanschteil (21) die beiden Ausnehmungen (11) voneinander trennt, wobei der Einlaß (2) zu der ringförmigen Kammer (8) durch diesen Flanschteil (21) hindurch gebildet ist.

4. Dichtung nach einem der Ansprüche 1 bis 3, dadurch gekennzeichnet, daß das jedem schwimmenden Teil (3) zugeordnete Dichtungsmittel (9) den Spalt zwischen der inneren Umfangsfläche (18) des schwimmenden Teiles (3) und der entgegengesetzten Oberfläche des drehbaren Teiles (10) als Folge des Druckunterschiedes abdichtet, der dadurch aufgebracht wird, daß es der Flüssigkeit auf einer Seite des schwimmenden Teiles (3) ausgesetzt wird.

5. Dichtung nach Anspruch 4, dadurch gekennzeichnet, daß die innere Umfangsfläche eines jeden schwimmenden Teiles (3) mit einer ringförmigen Nut (17) mit geneigten Wänden (18) und einem elastischen O-Ring (9) versehen ist, der zwischen dem drehbaren Teil (10) und dem schwimmenden Teil (3) in der Nut (17) angeordnet ist, so daß, wenn der elastische O-Ring (9) einem Druckunterschied ausgesetzt wird, er zwischen eine der geneigten Oberflächen (18) der Nut (17) und dem drehbaren Teil (10) eingekeilt wird, um eine Dichtung dazwischen zu bilden.

6. Dichtung nach Anspruch 5, dadurch gekennzeichnet, daß der elastische O-Ring (9) in einer Nut in dem drehbaren Teil (10) angeordnet ist.

7. Dichtung nach einem der Ansprüche 1 bis 3, dadurch gekennzeichnet, daß das Dichtungsmittel (20) eine physikalische Änderung durchmacht, wenn es einer Flüssigkeit ausgesetzt wird, wobei diese Änderung dazu führt, daß das Dichtungsmittel (20) den Spalt zwischen der inneren Umfangsfläche (18) des schwimmenden Teiles (3) und dem drehbaren Bauteil (10) schließt.

8. Dichtung nach Anspruch 7, dadurch gekennzeichnet, daß das Dichtungsmittel (20) anschwillt, wenn es einer Flüssigkeit ausgesetzt wird.

9. Dichtung nach einem der vorhergehenden Ansprüche, dadurch gekennzeichnet, daß die Halteeinrichtung (5) und die schwimmenden Teile (3) in einer Vielzahl von bogenförmigen Teilen gebildet sind, die um das drehbare Bauteil (10) herum zusammengehalten werden können.

## Revendications

1. Joint destiné à établir un joint étanche aux fluides entre un composant rotatif (10) et une cloison (1) qui sépare deux chambres, dans lequel le composant rotatif (10) traverse la cloison, comprenant des moyens de retenue (5) adaptés pour être montés sur la cloison (1) de façon à entourer le composant rotatif (10) à l'endroit où il traverse la cloison (1), lesdits moyens de retenue (5) étant agencés pour positionner un ensemble d'étanchéité (3, 9; 20) d'une manière qui permet un déplacement radical limité du composant rotatif (10) par rapport aux moyens de retenue (5), ledit ensemble d'étanchéité (3, 9; 20) comprenant un élément flottant annulaire (3) dont la périphérie intérieure (16) est dimensionnée de façon à ménager un petit jeu autour du composant rotatif (10), et des moyens d'étanchéité (9; 20) adaptés pour être interposés entre la surface périphérique intérieure (18) de l'élément flottant (3) et la surface opposée du composant rotatif (10), lesdits moyens d'étanchéité (9; 20) étant agencés pour fermer hermétiquement l'espace situé entre l'élément flottant (3) et le composant rotatif (10), et l'élément flottant (3) étant agencé pour s'appuyer à joint étanche contre les moyens de retenue (5) lorsqu'ils sont exposés à un liquide sur un côté de l'ensemble d'étanchéité (3, 9; 20), caractérisé en ce que les moyens de retenue (5) définissent deux formations annulaires (11) espacées axialement, chaque formation (11) recevant un ensemble d'étanchéité (3, 9; 20) séparé de l'autre à un certain écartement pour définir une chambre annulaire (8) entre ces ensembles, une entrée (2) débouchant dans la chambre (8), entrée à l'aide de laquelle un liquide peut être introduit dans la chambre (8) pour mettre les ensembles d'étanchéité (3, 9; 20) en appui à joint étanche contre le composant rotatif (10) et contre les moyens de retenue (5).

2. Joint selon la revendication 1, caractérisé en ce que les moyens de retenue (5) définissent une paire de cavités annulaires (11) qui s'ouvrent vers l'intérieur, les éléments flottants (3) étant placés entre des parois radiales (12) des cavités (11) et possédant des surfaces radialement opposées (13) qui sont capables d'établir un contact étanche au liquide avec les parois (12) des cavités (11), en réponse à la pression axiale appliquée aux éléments flottants (3) par l'exposition à un liquide d'un côté de l'élément flottant (3).

3. Joint selon la revendication 2, caractérisé en ce qu'une partie collerette (21) dirigée radialement vers l'intérieur sépare les deux cavités (11), l'entrée (2) qui débouche dans la chambre annulaire (8) étant prévue à travers cette partie collerette (21).

4. Joint selon l'une quelconque des revendications 1 à 3, caractérisé en ce que les moyens d'étanchéité (9) associés à chacun des éléments flottants (3) ferme hermétiquement l'espace situé entre la surface périphérique intérieure (18) de l'élément flottant (3) et la surface opposée du composant rotatif (10) sous l'effet de la différence de pression exercée par l'exposition à un liquide sur un côté de l'élément flottant (3).

5. Joint selon la revendication 4, caractérisé en ce que la surface périphérique intérieure de chaque élément flottant (3) est munie d'une gorge annulaire (17) possédant des parois inclinées (18), et en ce qu'une bague torique (9) en matière élastomère est positionnée dans la gorge (17) entre le composant rotatif (10) et l'élément flottant (3), de sorte que, lorsqu'elle est soumise à l'effet d'une différence de pression, la bague torique (9) en matière élastomère est coincée entre une des surfaces inclinées (18) de la gorge (17) et le composant rotatif (10) pour former un joint hermétique entre cette surface et ce composant.

6. Joint selon la revendication 5, caractérisé en ce que la bague torique (9) en matière élastomère est logée dans une gorge du composant rotatif (10).

7. Joint selon l'une quelconque des revendications 1 à 3, caractérisé en ce que les moyens d'étanchéité (20) subissent une modification physique lorsqu'ils sont exposés au liquide, cette modification amenant les moyens d'étanchéité (20) à fermer l'espace situé entre la surface périphérique intérieure (18) de l'élément flottant (3) et le composant rotatif (10).

8. Joint selon la revendication 7, caractérisé en ce que les moyens d'étanchéité (20) gonflent lorsqu'ils sont exposés au liquide.

9. Joint selon l'une quelconque des revendications précédentes, caractérisé en ce que les moyens de retenue (5) et les éléments flottants (3) sont composés d'une pluralité de pièces courbes qui peuvent être assemblées autour du composant rotatif (10).

FIG. 1.

FIG. 2.